# EUROPÄISCHE PATENTSCHRIFT

(11) **EP 1 695 627 B1**
(45) Veröffentlichungstag und Bekanntmachung des Hinweises auf die Patenterteilung: **17.01.2007**
(21) Anmeldenummer: 05004120.1
(22) Anmeldetag: 25.02.2005
(51) Int. Cl.: A22C 11/02

(54) **Vorrichtung und Verfahren zum Befüllen von Wursthüllen mit pastösem Füllgut**
Device and method for filling sausage casings
Procédé et dispositif de bourrage de boyaux de saucisses

(43) Veröffentlichungstag der Anmeldung: 30.08.2006
(73) Patentinhaber: Albert Handtmann Maschinenfabrik GmbH & Co. KG, 88400 Biberach (DE)
(72) Erfinder: Braig, Wolfgang, 88471 Laupheim (DE); Schliesser, Gerhard, 88489 Wain (DE)
(74) Vertreter: Grünecker, Kinkeldey, Stockmair & Schwanhäusser Anwaltssozietät

(56) Entgegenhaltungen:
- EP-A- 0 247 462
- EP-A- 1 230 858
- CH-A5- 682 440
- GB-A- 976 987
- GB-A- 1 443 487
- US-A- 3 975 795

## Beschreibung

Die Erfindung betritt eine Vorrichtung sowie ein Verfahren zum Befüllen von Wursthüllen mit pastösem Füllgut.

Eine solche Vorrichtung wie ein solches Verfahren sind beispielsweise bereits aus der GB 1 443 487 bekannt. Diese Druckschrift zeigt ebenfalls bereits eine Vorrichtung zum Befüllen von Wursthüllen, mit einem Füllrohr und einer nicht drehbaren Ringdüse, die als Halterung dient. Die Ringdüse hält die erzeugte Wurst fest, um die Abdrehstelle direkt nach dem Füllrohr zu erhalten.

Auch die GB 976,987 beschreibt bereits eine solche Vorrichtung, die ebenfalls eine mit einem Gehäuse fest verbundenen Haltering aufweist, der die erzeugte Wust am Mitdrehen hindert, so dass die Abdrehstelle direkt am Ende des Füllrohrs entsteht.

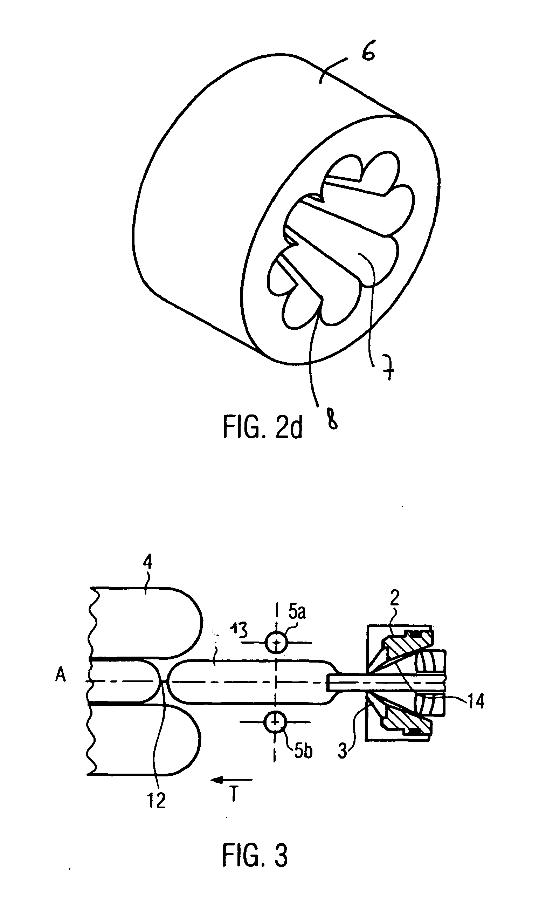

Derartige Füllmaschinen und Verfahren sind bereits, wie in Fig. 3 gezeigt, aus dem Stand der Technik bekannt. Bei der bekannten Vorrichtung und den bekannten Verfahren wird pastöses Füllgut, beispielsweise Wurstbrät in eine Wursthülle 14 über ein Füllrohr 1 geschoben. Die Wursthülle 14 ist dabei auf dem Füllrohr 1 aufgezogen und wird in bekannter Weise durch den Bremsring 3 einer Darmbremse 2 vom Füllrohr abgezogen und wird so auf Spannung gehalten.

Zum Herstellen von Einzelportionen wird der gefüllte Wurststrang 13 durch Verdrängerelemente 5a, b abgeteilt. Die Verdrängerelemente 5a, b können beispielsweise Verdrängerflügel sein, die sich in einer Drehbewegung aufeinander zubewegen, so dass der gefüllte Strang durch die sich schließenden Verdrängerflügel abgeteilt wird. Der gefüllte Wurststrang 13 wird dann durch eine Transporteinheit 4, hier eine Längeneinheit 4, in Transportrichtung T weitergefördert. Der gefüllte Wurststrang 13 wird von der Längeneinheit 4 gehalten, so dass, wenn der gefüllte Darm mit dem Füllrohr 1 und der Darmbremse 2 in Rotation versetzt wird und sich gegenüber der gehaltenen Wurst verdreht, an der Stelle, an der das pastöse Gut verdrängt wurde, eine Abdrehstelle 12 einspringen und die Wurst abgedreht werden kann.

Dabei ergibt sich bei bestimmten Wurstsorten das folgende Problem:

Bei Brätmassen mit kleinen Fleisch- oder Schwarteeinlagen (kleiner 2 mm) sammeln sich an der Außenfläche der Wurst viele Fleisch- oder Schwartepartikel an, die dann durch die Wursthülle hindurch sichtbar werden. Die Oberfläche der Wurst wird dadurch uneben. Bei bestimmten Wurstsorten, z.B. Hot Dog, ist jedoch eine glatte und homogene Außenstruktur ohne sichtbare Partikel erwünscht. Eine derartige glatte Außenstruktur ergibt sich durch einen Film aus tierischem Eiweiß, der sich bei der Produktion an der Innenwand des Füllrohrs bildet und beim Brätausstoß direkt unter die Wursthülle strömt.

Hier ergibt sich jedoch das Problem, dass die sich bildende Wurst im Bereich zwischen dem Ende des Füllrohrs und den Transportbändern radial nicht gehalten wird. Dadurch kann sich der Massestrom beim Austritt aus der Tülle durch die Rotation aus der Mittelachse A bewegen. Der Eiweißfilm, der an der Innenwand des Füllrohrs durch die Reibung aufgebaut wird und zur Wurstaußenseite strömen soll, wird somit durch turbulente Strömungen aufgerissen, und Masse aus dem Inneren des Füllstroms (inklusive Fleischpartikel) bewegen sich nach außen, was wiederum zu einer rauen und optisch nicht homogenen Oberfläche führt, bei der Partikel sichtbar sind.

Der vorliegenden Erfindung liegt daher die Aufgabe zugrunde eine Vorrichtung und ein Verfahren zum Befüllen einer Wursthülle mit pastösem Gut bereitzustellen, die ermöglichen, dass das pastöse Gut gleichmäßig ausströmt, wobei ein seitliches Ausweichen und damit eine Unwucht des austretenden pastösen Guts verhindert wird und die sich bildende Wurst im Zentrum gehalten wird.

Erfindungsgemäß wird diese Aufgabe durch die Merkmale der Ansprüche 1 und 7 gelöst.

Dadurch, dass gemäß der vorliegenden Erfindung der gefüllte Wurststrang am Ende des Füllrohrs durch eine Hülse mit konischer Innenkontur geführt wird, die über das Ausstoßende in Transportrichtung hervorragt, kann ein seitliches Ausweichen und damit eine Unwucht des austretenden Massestroms verhindert werden und die sich bildende Wurst im Zentrum gehalten werden. Durch diese spezielle Führung verringert sich die Turbulenz des Füllstroms beim Austritt aus dem Füllrohr.

Die Hülse ist dabei an der Darmbremse z.B. an dem Gehäuse oder dem Lager der Darmbremse befestigt. Somit kann die Hülse auf einfache Art und Weise derart angebracht werden, dass sich die Hülse zum Abdrehen des gefüllten Wurststrangs zusammen mit der Darmbremse drehen kann.

Gemäß einer bevorzugten Ausführungsform weist die konische Innenkontur einen Öffnungswinkel α in einem Bereich von 40 bis 60° vorzugsweise 50° auf. Dieser Winkelbereich ermöglicht ein gleichmäßiges Ausströmen.

Vorteilhafterweise weist die konische Innenkontur längliche Mitnahmerippen auf. Die länglichen Mitnahmerippen ermöglichen ein sicheres Abdrehen, wobei ein Formschluss mit der Wurst erreicht wird.

An der Innenwand des Füllrohrs bildet sich ein Film aus Eiweiß, der beim Ausstoß des Füllguts unter die Wursthülle strömt. Ein derartiger Eiweißfilm gewährleistet eine glatte Oberfläche der Wurst. Dadurch, dass durch die erfindungsgemäße Hülse die Turbulenz des Füllstroms beim Austritt aus dem Füllrohr verringert wird, kann der Eiweißfilm gezielt nach außen geführt werden und bleibt damit an der Wurstaußenseite erhalten.

Vorzugsweise ist die Darmbremse derart an dem Füllrohr angeordnet, dass das Ausstoßende des Füllrohrs 0 bis 2 mm über den Bremsring hervorragt. Somit kann auf einfache Art und Weise die Hülse an der Darmbremse befestigt werden und gleichzeitig über das Ausstoßende des Füllrohrs hervorragen. Wenn die Hülse an der Darmbremse befestigt ist kann sie auf einfache Weise zusammen mit dieser in Drehung versetzt werden. Dadurch, dass sich die konische Hülse mit gleicher Geschwindigkeit wie die Darmbremse beim Abdrehvorgang der gefüllten Wursthülle dreht wird die Drehung der sich bildenden Wurst unterstützt.

Die vorliegende Erfindung wird nachfolgend im Zusammenhang mit den folgenden Zeichnungen näher erläutert.
- Fig. 1: zeigt schematisch einen Schnitt durch die erfindungsgemäße Vorrichtung,
- Fig. 2A: zeigt einen Schnitt durch die in Fig. 1 gezeigte Hülse mit konischer Innenkontur,
- Fig. 2B: ist eine Draufsicht auf die in Fig. 2A dargestellte Hülse,
- Fig. 2C: ist ein Schnitt entlang der Linie I-I der Fig. 2A,
- Fig. 2D: ist eine perspektivische Darstellung der in Fig. 2A bis 2C dargestellten Hülse,
- Fig. 3: zeigt einen schematischen Schnitt durch einen Teil einer Füllmaschine gemäß dem Stand der Technik,
- Fig. 4: zeigt mögliche Ausgestaltungen der konischen Innenkontur.

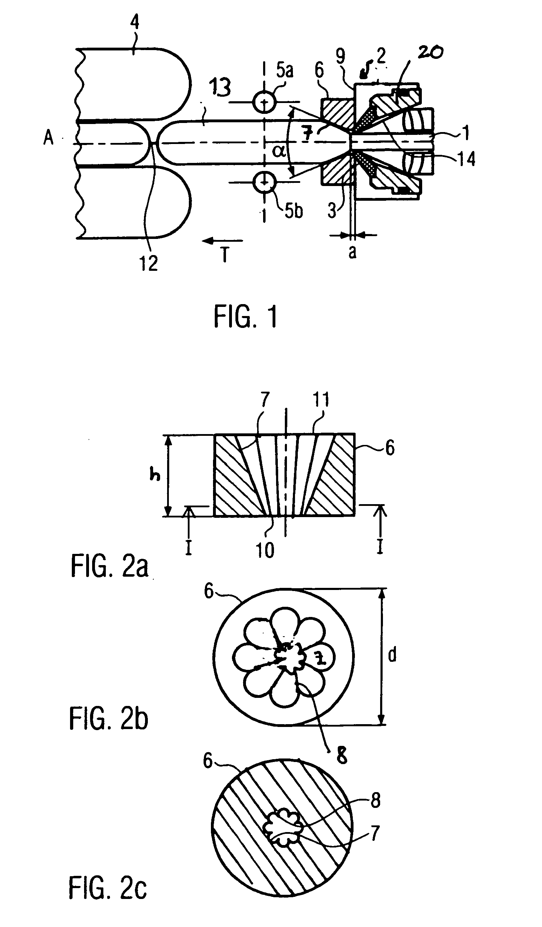

Fig. 1 zeigt eine Vorrichtung zum Befüllen von Wursthülle 14 mit pastösem Füllgut mit einem Füllrohr 1 und einer Darmbremse 2. Bekannterweise weist eine Füllmaschine auch noch einen Einfülltrichter und eine entsprechende Pumpe auf (nicht dargestellt), die das pastöse Füllgut in das Füllrohr 1 kontinuierlich oder intermittierend drückt. Wie auch bereits im Zusammenhang mit dem in Fig. 3 gezeigten Stand der Technik beschrieben wurde, füllt das aus dem Füllrohr 1 ausgestoßene pastöse Füllgut die durch die Darmbremse 2 gezogene Wursthülle 14. Die Wursthülle 14 ist dabei auf den Füllrohr 1 gerafft. Die Darmbremse 2 weist in bekannter Weise einen Bremsring 3 auf, unter dem die Wursthülle 14 läuft, und der die Wursthülle 14 gespannt hält.

Zum Abdrehen des gefüllten Wurststrangs 13 kann die Darmbremse 2 zusammen mit dem Füllrohr 1 um die Mittelachse A gedreht werden.

Die Vorrichtung weist weiter eine Längeneinheit 4 auf, die als Transporteinrichtung dient, und den gefüllten Wurststrang 13 in Transportrichtung T bewegt. Die Längeneinheit 4 weist hier zwei umlaufende Transportbänder auf, zwischen denen die gefüllte Wursthülle weiter transportiert wird.

Die Vorrichtung weist weiter eine Verdrängereinrichtung mit zwei Verdrängerelementen 5a, 5b auf, die beispielsweise Verdrängerflügel aufweisen, die sich in einer Drehbewegung aufeinander zubewegen, so dass die gefüllte Wursthülle 13 durch Verdrängen des Füllguts abgeteilt werden kann um einzelne Wurstportionen zu bilden. Die Abdrehstelle 12 kann sich bilden, da die gefüllte Wursthülle 13 nach den Verdrängem zwischen den Bändem der Längeneinheit 4 gegen Verdrehen gehalten wird, bevor die gefüllte Wursthülle mit Füllrohr und Darmbremse 2 in Rotation versetzt wird und sich gegenüber der gehaltenen Wurst verdreht. Die Darmbremse 2 stellt eine Baugruppe dar, die die Lagerung 9, die Einstellschraube 20 und den Bremsring 3 umfasst. Es ist auch möglich, dass die Lagerung 9 und die Hülse 6 als ein Teil gebildet sind.

Die erfindungsgemäße Vorrichtung ist derart aufgebaut, dass das Ausstoßende des Füllrohrs 1 nur knapp über den Bremsring 3 hinausragt. Der Abstand a zwischen Bremsring 3 und dem Ausstoßende des Füllrohrs 1 liegt in einem Bereich zwischen 0 und 2 mm. Gemäß der vorliegenden Erfindung ist hier z.B. an der Lagerung 9 der Darmbremse eine Hülse 6 befestigt. Die Hülse 6 ragt über das Ausstoßende des Füllrohrs 1 in Transportrichtung hervor. Die Hülse 6 weist eine konische Innenkontur 7 auf. Da die Hülse 6 hier an der Lagerung 9 befestigt ist, kann sie zum Abdrehen zusammen mit der Darmbremse 2 um die Achse A in Rotation versetzt werden.

In Fig. 2A bis 2D ist die Hülse 6 in einer bevorzugten Ausführungsform näher beschrieben.

Fig. 2A zeigt einen Schnitt durch die Hülse 6, die eine konische Innenkontur 7 aufweist. Das bedeutet, dass die Öffnung 10 der Hülse 6, die dem Füllrohr 1 zugewandt ist einen kleineren Durchmesser aufweist als die Öffnung 11 der Hülse die vom Füllrohr abgewandt ist.

Der Öffnungswinkel α der konischen Innenkontur 7 liegt in einem Bereich von 40 bis 60° vorzugsweise bei etwa 50°. Die Höhe der Hülse h wird begrenzt durch den Freiraum zu den Verdrängern. Der Durchmesser d der Hülse beträgt mindestens das Wurstkaliber. Der Durchmesser der Öffnung 10 wird etwas größer gewählt als der Außendurchmesser des Füllrohrs 1, so dass sich die Wursthülle unter einem Bereich, wo sich Hülse 6 und Füllrohr 1 überlappen durchtreten kann. Der Durchmesser der Öffnung 11 entspricht im Wesentlichen dem Durchmesser des gefüllten Wurststrangs 13. Das Material der Hülse 6 ist vorzugsweise Kunststoff, insbesondere POM. Die Hülse 6 wird derart angeordnet, dass ihre Mittelachse M mit der Mittelachse A der Vorrichtung zusammenfällt.

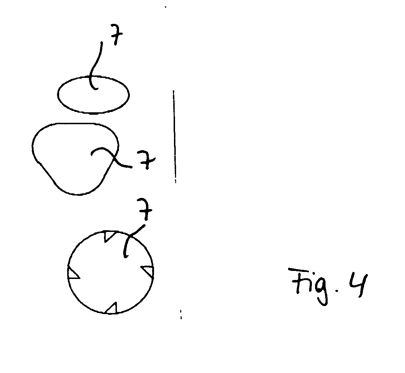

Gemäß einer bevorzugten Ausführungsform weist die Hülse 6 an ihrer konischen Innenkontur 7 Mitnahmerippen 8 auf. Diese Mitnahmerippen 8 ermöglichen einen Formschluss mit der gefüllten Wursthülle 13. In diesem Ausführungsbeispiel sind die Flächen zwischen den Rippen 8 abgerundet bogenförmig ausgebildet. Ein Formschluss und damit eine Verbesserung der Mitnahme kann z.B. auch erreicht werden durch ovale Ausformung des Konus, ein abgerundetes Dreieck oder eine einseitig schräge Verzahnung, wie beispielsweise in Fig. 4 gezeigt ist.

Da gemäß der vorliegenden Erfindung an der Lagerung 9 der Darmbremse 2 die Hülse 6 mit der konischen Innenkontur 7 angeordnet ist, wird ein seitliches Ausweichen und damit eine Unwucht des austretenden Massestroms verhindert und die sich bildende Wurst kann im Zentrum gehalten werden, d.h., dass die Mittelachse des gefüllten Wurststrangs 13 sich im Wesentlichen entlang der Mittelachse A der Vorrichtung erstreckt. Durch diese spezielle Führung verringert sich die Turbulenz des Füllstroms beim Austritt aus dem Füllrohr 1.

Es ist möglich, dass sich an der Innenwand des Füllrohrs 1 ein Film aus tierischem Eiweiß bildet, der beim Ausstoß des Füllguts unter die Wursthülle 14 strömt. Der Eiweißfilm wird an der Innenwand des Füllrohrs durch Reibung erzeugt und strömt zur Wursthülle. Dadurch, dass durch die Hülse 6 die Turbulenz des Füllstroms beim Austritt aus dem Füllrohr 1 minimiert wird, kann der Eiweißfilm gezielt nach außen geführt werden und bleibt dann an der Wurstaußenseite erhalten. Der Eiweißfilm wird wie folgt erzeugt: Durch Reibung wird das im Fleisch befindliche Eiweiß abgesondert und sammelt sich an der Innenwand des Füllrohrs 1. Dieser Eiweißfilm verfestigt sich später beim Kochen der Wurst zu einem "Gittemetz", so dass die fertige Wurst eine feste Außenhülle erhält.

Das erfindungsgemäße Verfahren funktioniert wie folgt. Auf dem Füllrohr 1 ist in bekannter Weise Wursthülle 14 aufgerafft, die durch die Darmbremse 2 unter dem Bremsring 3 hindurchgeführt wird. Durch eine nicht dargestellte Pumpe wird pastösen Füllgut wie z.B. Wurstbrät in die Wursthülle 14 ausgestoßen. Am Ausstoßende des Füllrohrs 1 tritt dann die gefüllte Wursthülle durch die Öffnung 10 der Hülse 6 und gleitet entlang der konischen Innenkontur 7 der Hülse 6 hindurch. Dabei wird die gefüllte Wursthülle 13 durch die Hülse 6 im Zentrum gehalten und darüber hinaus wird ein seitliches Ausweichen und damit eine Unwucht des austretenden Massestroms verhindert. Die Hülse 6 verhindert darüber hinaus auch die Turbulenzen des Füllstroms beim Austritt aus dem Füllrohr 1, da sich hierbei das Füllgut nicht unkontrolliert radial nach außen bewegen kann.

Gemäß einer bevorzugten Ausführungsform kann wie zuvor näher erläutert ein Eiweißfilm an der Innenwand des Füllrohrs 1 durch Reibung aufgebaut werden und zur Wurstaußenseite strömen. Durch die spezielle Führung durch die Hülle 6 verringert sich die Turbulenz des Füllstroms beim Austritt aus dem Füllrohr und der Eiweißfilm kann gezielt nach außen geführt werden und bleibt damit im äußeren Bereich der Wurst erhalten.

Die gefüllte Wursthülle 13 wird durch die Längeneinheit 4 und den Brätausstoß in Transportrichtung T bewegt. Die gefüllte Wursthülle 13 läuft dann zu dem Verdrängerpaar 5a, 5b, wobei sich die Verdrängerflügel in einer Drehbewegung aufeinander zubewegen und das pastöse Füllgut in dem gefüllten Wurststrang 13 verdrängen um Einzelwürste zu erzeugen. Zum Abdrehen der durch die Verdrängerelemente 5a, 5b unterteilten Würste wird das Füllrohr 1 zusammen mit der Darmbremse 2 und der Hülse 6 in Drehung um die Achse A versetzt. Die Abdrehstelle 12 kann sich bilden, da die gefüllte Wursthülle 13 nach den Verdrängem 5a, b z.B. zwischen den zwei Bändem der Längeneinheit 4 gegen Verdrehen gehalten wird, während davor die gefüllte Wursthülle mit Füllrohr 1 und Darmbremse 1 in Rotation versetzt wird und sich gegenüber der gehaltenen Wurst verdreht. Die konische Hülse dreht sich mit gleicher Geschwindigkeit wie die Darmbremse 2 und unterstützt die Drehung der sich bildenden Wurst. Um ein sicheres Abdrehen zu unterstützen kann, ist wie voran beschrieben, die konische Hülse an der Innenseite mit Mitnahmerippen 8 versehen sein, um einen Formschluss mit der Wurst zu erzeugen.

## Patentansprüche

1. Vorrichtung zum Befüllen von Wursthülle (14) mit pastösem Füllgut mit einem Füllrohr (1) und einer Darmbremse (2), wobei um den Bereich des Ausstoßendes des Füllrohrs (1) eine Hülse (6) mit konischer Innenkontur (7) angebracht ist, die über das Ausstoßende hervorragt, **dadurch gekennzeichnet, dass** die Hülse (6) an der Darmbremse (2) befestigt ist, und dass die Hülse (6) zusammen mit der Darmbremse (2) in Rotation versetzbar ist.

2. Vorrichtung nach Anspruch 1, **dadurch gekennzeichnet, dass** die Hülse (6) an einem Gehäuse (9) oder einem Lager der Darmbremse (2) befestigt ist.

3. Vorrichtung nach mindestens einem der vorhergehenden Ansprüche, **dadurch gekennzeichnet, dass** die konische Innenkontur (7) einen Öffnungswinkel (α) in einem Bereich von 40 bis 60° vorzugsweise 50° aufweist.

4. Vorrichtung nach mindestens einem der vorhergehenden Ansprüche, **dadurch gekennzeichnet, dass** die konische Innenkontur (7) längliche Mitnahmerippen (8) aufweist.

5. Vorrichtung nach mindestens einem der vorhergehenden Ansprüche, **dadurch gekennzeichnet, dass** die Hülse (6) aus Kunststoff, insbesondere POM gefertigt ist.

6. Vorrichtung zum Befüllen von Wursthülle (14) nach mindestens einem der vorhergehenden Ansprüche, **dadurch gekennzeichnet, dass** die Darmbremse (2) derart auf dem Füllrohr (1) angeordnet ist, dass das Ausstoßende des Füllrohrs (1) 0 bis 2 mm über die Darmbremse (2) hervorragt.

7. Verfahren zum Befüllen von Wursthülle (14) mit pastösem Gut, wobei auf ein Füllrohr (1) aufgezogene Wursthülle (14) durch das Füllrohr (1) mit pastösem Gut befüllt wird und am Ausstoßende des Füllrohrs (1) durch eine Hülse (6) mit konischer Innenkontur (7) geführt und zentriert wird, wobei zum Abdrehen der gefüllten Wursthülle (14) die Hülse (6) zusammen mit einer Darmbremse (2) in Drehung versetzt wird.

## Claims

1. A device for filling a sausage sleeve (14) with paste-like filling material, comprising a filling tube (1) and a skin brake (2), a bush (6) with a conical inner contour (7); which protrudes over the ejection end, being fitted around the region of the ejection end of the filling tube (1), **characterised in that** the bush (6) is attached to the skin brake (2), and that the bush (6) is rotatable together with the skin brake (2).

2. The device according to claim 1, **characterised in that** the bush (6) is attached to a housing (9) or a support of the skin brake (2).

3. The device according to at least one of the aforementioned claims, **characterised in that** the conical inner contour (7) exhibits an opening angle (α) in a range from 40 to 60°, preferably 50°.

4. The device according to at least one of the aforementioned claims, **characterised in that** the conical inner contour (7) exhibits longitudinal engaging ribs (8).

5. The device according to at least one of the aforementioned claims, **characterised in that** the bush (6) is made of plastic, in particular POM.

6. The device for filling a sausage sleeve (14) according to at least one of the aforementioned claims, **characterised in that** the skin brake (2) is arranged on the filling tube (1) such that the ejection end of the filling tube (1) protrudes 0 to 2 mm over the skin brake (2).

7. A method of filling a sausage sleeve (14) with paste-like material, wherein a sausage sleeve (14) gathered up on a filling tube (1) is filled with paste-like material through the filling tube (1) and at the ejection end of the filling tube (1) it is passed through a bush (6) with conical inner contour (7) and is centred, wherein the bush (6) is rotated together with a skin brake (2) to twist off the filled sausage sleeve (14).

## Revendications

1. Dispositif pour remplir une enveloppe de saucisse (14) avec de la masse de remplissage pâteuse, comportant un tube de remplissage (1) et un frein de boyau (2), dans lequel une douille (6) à contour intérieur conique (7), qui dépasse au-dessus de l'extrémité d'expulsion est montée autour de la zone de l'extrémité d'expulsion du tube de remplissage (1), **caractérisé en ce que** la douille (6) est fixée sur le frein de boyau (2) et que la douille (6) peut être animée en rotation conjointement avec le frein de boyau (2).

2. Dispositif selon la revendication 1, **caractérisé en ce que** la douille (6) est fixée sur un carter (9) ou un palier du frein de boyau (2).

3. Dispositif selon l'une au moins des revendications précédentes, **caractérisé en ce que** le contour intérieur conique (7) présente un angle d'ouverture (α) compris dans une plage de 40 à 60°, de préférence de 50°.

4. Dispositif selon l'une au moins des revendications précédentes, **caractérisé en ce que** le contour intérieur conique (7) présente des nervures d'entraînement (8) allongées.

5. Dispositif selon l'une au moins des revendications précédentes, **caractérisé en ce que** la douille (6) est réalisée en matière plastique, en particulier en POM.

6. Dispositif pour remplir une enveloppe de saucisse (14) selon l'une au moins des revendications précédentes, **caractérisé en ce que** le frein de boyau (2) est disposé de telle façon sur le tube de remplissage (1) que l'extrémité d'expulsion du tube de remplissage (1) dépasse de 0 à 2 mm au-delà du frein de boyau (2).

7. Procédé pour remplir une enveloppe de saucisse (14) avec de la masse de remplissage pâteuse, dans lequel l'enveloppe de saucisse (14) enfilée sur un tube de remplissage (1) est remplie de masse de remplissage pâteuse par le tube de remplissage (1) et est guidée et centrée à l'extrémité d'expulsion du tube de remplissage (1) par une douille (6) à contour intérieur conique (7), la douille (6) étant animée en rotation conjointement avec un frein de boyau (2) pour tourner l'enveloppe de saucisse (14) remplie.
